# EUROPEAN PATENT SPECIFICATION

(11) **EP 3 713 760 B1**
(45) Date of publication and mention of the grant of the patent: **13.03.2024**
(21) Application number: 18807076.7
(22) Date of filing: 21.11.2018
(51) Int. Cl.: B32B 7/06, B32B 5/02, B32B 27/12, B32B 27/32, B32B 37/22, B29C 65/22, B29C 65/30, B29C 70/38

(54) **INTERMEDIATE MATERIAL AND A METHOD OF MANUFACTURING SUCH MATERIAL**
ZWISCHENMATERIAL UND VERFAHREN ZUR HERSTELLUNG SOLCH EINES MATERIALS
MATÉRIAU INTERMÉDIAIRE ET PROCÉDÉ DE FABRICATION D'UN TEL MATÉRIAU

(30) Priority: 23.11.2017 GB 201719470
(43) Date of publication of application: 30.09.2020
(73) Proprietor: Hexcel Composites Limited, Duxford Cambridgeshire CB22 4QB (GB)
(72) Inventor: ELLIS, John, Duxford Cambridgeshire CB22 4QB (GB); CABALLERO, Andrea, Duxford Cambridgeshire CB22 4QB (GB)
(74) Representative: TLIP Limited
(86) International application number: PCT/EP2018/082056
(87) International publication number: WO 2019/101785

(56) References cited:
- WO-A2-2013/077930
- WO-A2-2013/077930
- US-A1- 2009 133 824
- US-A1- 2015 129 128
- US-B2- 9 278 509

## Description

The present invention is concerned with an intermediate material for composite manufacture comprising a prepreg layer and an interleaving layer intended to prevent self-adhesion of the prepreg layer, particularly relatively long and narrow strips of such intermediate material. The present invention is also concerned with a method of manufacture of the intermediate material.

Composite materials are well known, and are frequently used to produce strong and lightweight components. In one manufacturing technique, a fibre component (for example carbon or glass fibre) is pre-impregnated with a matrix material (typically a polymer, such a thermosetting polymer). The matrix material is uncured when it is used for impregnation, and as such retains some flexibility. This "prepreg" material can be handled and stored before it is cut and shaped, and eventually cured to form the final (hardened) product. Prepreg materials are typically formed in rolls for ease of storage and transport.

An increasingly popular manufacturing technique utilises an automated fibre placement (AFP) apparatus to deposit prepreg onto a surface- for example a three dimensional mould form. The use of AFP avoids the waste associated with cutting a preform from a large sheet. AFP typically involves deposition of prepreg tape via a moveable, automated head.

Narrow strips or tapes of prepreg (typically 3 to 50mm wide) are fed to the AFP head for deposition. These tapes may originate from large, wide (typically in the order of metres, for example 2 metres) sheets of master prepreg. In such cases, the master prepreg sheet may be cut into the tapes using a cutting machine configured to make multiple simultaneous cuts (for example 49 cuts for a 2m wide master, generating 50 40mm strips). Each tape may then be wound, for example onto a spool, for transport to the AFP machine.

The master prepreg to be cut into narrow strips may be supplied as pre manufactured sheets, often in the form of rolls, in which case it may comprise one or more backing or interleaving layers, which may be removed before the sheets are slit into narrow strips. Alternatively, the slitting of the master prepreg may be carried out as the master prepreg is formed, i.e. without intervening rolling and storage, so that the production of the master prepreg and the slitting thereof may be part of a single continuous process.

Prepreg generally has at least some degree of surface tack, and therefore in order to prevent the prepreg from adhering to itself when cut strips of the prepreg are wound up, the strips may be provided with a backing sheet, also known as an interleaving material. The backing sheet may be formed from a polymeric material, or blends thereof, such as a polyolefin, and more particularly a polyethylene, such as LDPE or HDPE, and may be a monolayer or a multilayer polymeric sheet. Typically, the interleaving material is 30 to 70 microns thick. The interleaving material is generally supplied in rolls or spools, usually having a width 3 to 12mm wider than the prepreg tape. The interleaving material is wound on the spool with the prepreg tape. The resulting combination of layered prepreg and interleaving material represents an intermediate step in the manufacturing process, and as such is referred to herein as an "intermediate material".

WO 2013/077930 discloses a prepreg intermediate material comprising a prepreg layer supported on an interleaving layer made of paper or polyethylene.

There is increasingly a demand for strips of prepreg of relatively long length, particularly for use in AFP processes to reduce the need to stop application of material to replace a depleted roll of prepreg with a fresh roll. In particular, lengths of narrow/slit prepreg of at least 3000m, and often much longer, are required. Prepreg strips of such lengths may be produced directly, for example by slitting continuously forming sheets of prepreg as a step in an integrated manufacturing process, or by slitting long lengths of preformed prepreg stored as rolls. However, in the latter case the rolls will be very large and heavy, and therefore difficult to prepare, transport and handle. Alternatively, long strips of narrow prepreg may be formed by slitting relatively multiple rolls of short lengths of broad preformed prepreg and joining the strips formed from each roll together. Means for joining lengths of narrow strips of prepreg are known.

A problem associated with forming rolls from such long narrow strips of prepreg is the difference in the length of the prepreg strips and the supplied length of the interleaving material, which is generally much shorter. Specifically, rolls of interleaving materials are generally no longer than 2,500m, whereas the prepreg strips may be at least 3,000m long and often much longer. This means that a plurality of lengths of interleaving material must be joined together to cover the entire length of prepreg tape. A currently used method of joining two or more lengths of interleaving material is to join the lengths at their ends using adhesive tape. These "splices" may be created by a butt-joint or overlapping (lap) joint.

The same technique may be used in the unlikely event that the interleaving material breaks. A problem with the technique is that the adhesive tape has a tendency to pick up foreign material- known as Foreign Object Debris (FOD). Additionally, miss-positioned or loose fragments of the adhesive tape can also act as FOD. This FOD can be transferred to the prepreg strips (which are inherently tacky), which is a significant problem as it may interfere with the winding of the strips and/or their subsequent use. In particular, FOD may interfere with the operation of the AFP head, and furthermore may detrimentally affect the mechanical properties of the eventual composite material.

The present invention aims to obviate or at least mitigate the above described problems and/or to provide improvements generally.

According to the invention, there is provided an intermediate material and a method as herein described and/or as defined in any one of the accompanying claims.

The present invention provides an intermediate material for the manufacture of composite components, the intermediate material comprising:
a flat and elongate prepreg layer; and,
an interleaving layer in contact with at least one side of the prepreg layer, the interleaving layer comprising at least two sections of thermoplastic interleaving material, each of the sections of thermoplastic interleaving material being joined by heat to at least one other section of thermoplastic interleaving material form a continuous length of interleaving material;
in which the intermediate material is wound such that the interleaving layer reduces or eliminates self-contact of the prepreg layer.

The present invention further provides a method of manufacturing an intermediate material comprising the steps of:
a) providing a length of master prepreg having a first width;
b) cutting the master prepreg into a plurality of longitudinal strips of prepreg, each of the strips having a width less than the width of the master prepreg;
c) providing a first section of thermoplastic interleaving material, the first section of thermoplastic interleaving material having a length less than the length of each of the strips of prepreg;
d) placing a first end of the first section of thermoplastic interleaving material in contact with a first end of one of the strips of prepreg, the first section of thermoplastic interleaving layer having a width the same as or greater than the width of the strip of prepreg;
e) bringing the length of the first section of thermoplastic interleaving material gradually into contact with the length of the strip of prepreg;
f) before the second end of the first section of thermoplastic interleaving material contacts the strip of prepreg providing a second section of thermoplastic interleaving material having a width the same as or greater than the width of the strip of prepreg, and joining the second end of the first section of thermoplastic interleaving material to a first end of the second section of thermoplastic interleaving material by the application of heat to form a continuous length of thermoplastic interleaving material;
g) once the second end of the first section of thermoplastic interleaving material contacts the strip of prepreg bringing the length of the second section of thermoplastic interleaving material gradually into contact with the length of the strip of prepreg;
h) if necessary, repeating steps f) and g) until the full length of the strip of prepreg is in contact with a continuous length of thermoplastic interleaving material; and
i) winding the strip of prepreg in contact with the continuous layer of thermoplastic interleaving material such that the interleaving material reduces or eliminates self-contact of the prepreg layer.

Advantageously, the joining of the thermoplastic backing/interleaving material with heat, and preferably also pressure, allows it to fuse. When the fused section cools, there is no residual tackiness (unlike tape joining) and as such the risk of picking up FOD is significantly reduced.

Preferably the join between the two sections of interleaving material is configured to withstand a tensile force in the machine direction of at least 500psi (3.45 MPa) as measured to ISO 527-3 standard without separation. A preferred range of tensile strength is 500 to 40.000 psi (275.8 MPa).

Preferably, the interleaving material join should be strong enough to survive the following treatment intact:
- Co-winding with the prepreg material;
- Tensioning by a feed system to an AFP head;
- Feed through an AFP head;
- Separation from the prepreg material at an AFP head.

In the intermediate material of the present invention, the interleaving layer comprises at least two sections of thermoplastic interleaving material, each of the sections of thermoplastic interleaving material being joined by heat to at least one other section of thermoplastic interleaving material form a continuous length of interleaving material. Thus, it will be understood that, where the interleaving layer comprises only two sections of thermoplastic interleaving material, these sections are joined together by a single join. Alternatively, where the interleaving layer comprises more than two sections of thermoplastic interleaving material, the two end sections are each joined to one other section, while each central (non-end) section is joined to two other sections (by a joint at each end).

Where the intermediate materials of the present invention comprise more than two sections of thermoplastic interleaving material joined together to form the continuous length of interleaving material, different forms of joins and/or methods of joining may be used, but preferably, each of the joins is formed by heating, and most preferably each of the joins are formed in generally the same way.

In the process of the present invention, by bringing the length of a section of thermoplastic interleaving material "gradually" into contact with the length of a strip of prepreg, it is meant that, once the first end of a section of thermoplastic interleaving material has been bought into contact with a strip of prepreg, for example at a first end of the strip of prepreg, the region of the section of thermoplastic interleaving material immediately adjacent to the first end is next bought into contact with the region of the strip of prepreg immediately adjacent to the first contact point, and that this process continues along the length of the section of thermoplastic interleaving material until the second end of the length of thermoplastic interleaving material is reached, at which point it is connected to a second section of thermoplastic interleaving material and the process continues from this point. The section of thermoplastic interleaving material and the strip of prepreg may be bought into contact in this way by, for example, passing the two materials through a nip point, such as between two rollers applying pressure to join the two materials.

In the process of the present invention each of the sections of thermoplastic interleaving material have a width the same as or greater than the width of the strip of prepreg, and preferably each of the sections of thermoplastic interleaving layer have the same width.

In an embodiment of the present invention the application of heat to form a join between the sections of thermoplastic interleaving material causes partial melting of at least one, and preferably both, of the joined ends of the two sections of thermoplastic interleaving material. In particular, it is preferred that the heating does not cause complete melting of either of the ends of thermoplastic interleaving material, as this will reduce the strength of the join or even make forming a join impossible.

In an embodiment of the present invention the step of applying heat to form a join between the sections of thermoplastic interleaving material also comprises applying pressure. In this embodiment the pressure is preferably released in such a way that the integrity of the join is not significantly reduced. This may be achieved by allowing the joint to cool sufficiently to form, such as by stopping heating while the pressure is still being applied, or releasing the pressure slowly so the joint cools before the pressure applying means is fully removed. The speed of release depends on a number of factors, but the time and speed at which pressure is released is determined by when the joint is stable.

In an embodiment of the present invention the step of joining the two sections of thermoplastic interleaving material comprises the step of overlapping the ends of the two sections such that they are joined by a lap joint, preferably wherein the length of overlap is 5mm to 100mm, more preferably 10mm to 80mm, most preferably 20mm to 50mm.

In an embodiment of the present invention the ends of the two sections of thermoplastic interleaving material are joined at a continuous join region across the width of the two sections of thermoplastic interleaving material, and preferably the interleaving layer has a longitudinal axis, in which the join region extends parallel to a transverse axis perpendicular to the longitudinal axis.

In an embodiment of the present invention the ends of the two sections of thermoplastic interleaving material are joined at a plurality of discrete join regions across the width of the two sections of thermoplastic interleaving material, and preferably each of the plurality of join regions are elongate and parallel to the longitudinal direction of the thermoplastic interleaving material.

In an embodiment of the present invention the join regions are formed by contact with a heated wire.

In an embodiment of the present invention the thermoplastic interleaving layer formed by joining the sections of thermoplastic interleaving material is wider than the strip of prepreg such that it overhangs the strip of prepreg on one or both edges.

In an embodiment of the present invention the length of the strip of prepreg, and therefore also the length of the intermediate material of the invention, is at least 3,000m, preferably from 3,000m to 25,000m, more preferably from 5,000m to 15,000m.

In an embodiment of the present invention the width of the master prepreg before slitting is at least 0.075m, preferably from 0.075m to 3m, more preferably from 0.5 to 1.5m.

In an embodiment of the present invention the width of each of the plurality of longitudinal strips of prepreg cut from the master prepreg in step b) is 2mm to 100mm, preferably from 3mm to 55mm.

In an embodiment of the present invention, in step b) the master prepreg is cut into at least 2 longitudinal strips of prepreg, preferably at least 5 strips, more preferably from 5 to 100 strips, and most preferably from 25 to 50 strips.

In an embodiment of the process of the present invention the length of each of the strips of prepreg is greater than the length of the master prepreg, and the process includes the further step of cutting at least one further length of master prepreg into a further plurality of longitudinal strips of prepreg and joining each of the further plurality of longitudinal strips of prepreg to the first plurality of longitudinal strips of prepreg. In this embodiment, before joining each of the lengths of master prepreg is from 50m to 2,000m long, preferably from 700m to 1500m long.

In an embodiment of the process of the present invention, the lengths of each of the sections of thermoplastic interleaving material are preferably from 100m to 4,000m, more preferably from 500m to 3,000m.

In an embodiment of the present invention steps c) to i) are carried out on at least two of the plurality of longitudinal strips of prepreg, preferably on all of the plurality of strips of prepreg. In this embodiment, preferably each of the strips of prepreg on which steps c) to i) are carried out are processed at substantially the same time.

In an embodiment of the present invention the step of applying heat in step f) comprises applying heat using a hand-held heating device, preferably wherein the hand-held heating device is a battery powered device.

By "hand-held" device we mean a device which is typically portable, and can easily be carried in a single hand (therefore with a mass of greater than 2kg). The device may be battery operated for portability. Preferably the device has a pair of jaws (e.g. a press and anvil arrangement) that are resiliently biased into the open position. The gripping force from a user's hand can be used to bring the jaws together and thereby clamp and seal the interleaving material.

In one embodiment, both sides of the device (the press and anvil as referred to above) may comprise heating elements to thereby heat both sides of the interleaving material.

The heating device may comprise one or more heated wires or may have heated "heads" of different shapes and configurations, for example hatching / cross-hatching / plurality or matrix of "dots" etc.

The use of a hand-held heating device is particularly suitable in processes of the present invention, particularly embodiments in which multiple cut strips of prepreg are processed by the application of an interleaving layer at the same time, because such devices can be used with existing equipment, i.e. without the need to add fixed sealing units. Also the area in which joining of sections of interleaving materials needs to occur is severely restricted, particularly when many strips of prepreg are being processed in parallel, and hand-held devices can be moved into position wherever they are need relatively quickly and easily. Further, only a small amount of force is required with the application of heat to join the sections (less than the human grip force of circa 500N for adults). Still further, because the apparatus may need to be completely stopped when sections of interleaving material are joined, use of a hand-held device is advantageous as it is quick to manoeuvre into position, which limits the "downtime" when the apparatus is stopped.

An example intermediate material, interleaving layer and manufacturing process will now be described with reference to the accompanying drawings in which:
Figure 1A is a schematic side view of an apparatus for, and method of, manufacturing an intermediate material according to the invention in a first stage of operation;
Figure 1B is a schematic plan view of the apparatus and process of Figure 1A;
Figure 1C is a schematic side view of the apparatus and process of Figure 1A in a second stage of operation;
Figure 2A is a plan view of a first stage in a second manufacturing process for an interleaving layer;
Figure 2B is a plan view of a second stage in the manufacturing process for an interleaving layer of Figure 2A;
Figure 3 is a plan view of a third stage in the manufacturing process for an interleaving layer of Figure 2A;
Figure 4 is a plan view of an alternative third stage in the manufacturing process for an interleaving layer of Figure 2A; and,
Figure 5 is a side view of an apparatus for carrying out the stage of Figure 4.

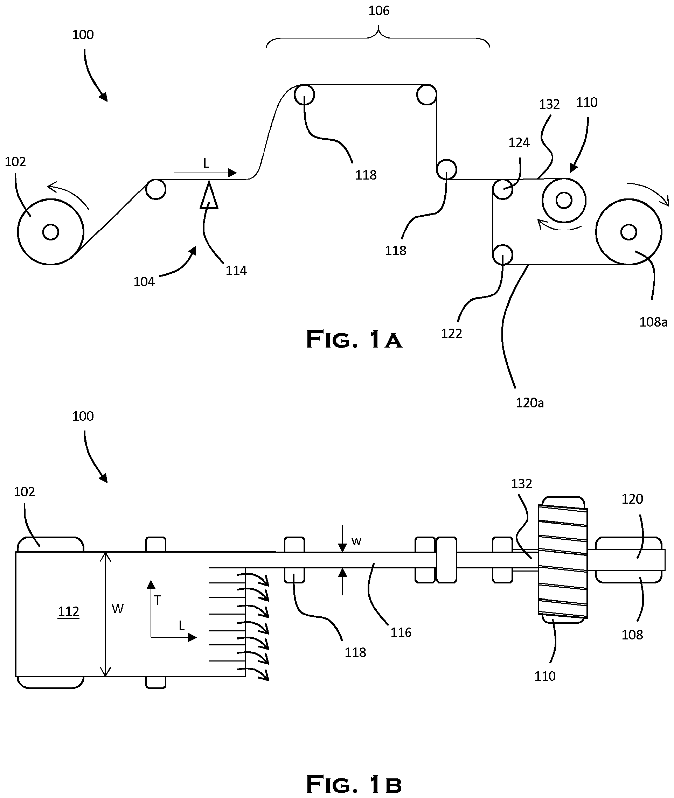

Referring to Figures 1A and 1B, an apparatus 100 for carrying out a manufacturing method according to the invention is shown. The apparatus 100 comprises a master roll 102, a cutting assembly 104, a tensioning assembly 106, an interleaving material roll 108 and a spool winder 110.

The master roll 102 has uncured (or partially cured) master pre-impregnated ("prepreg") material 112 wound thereon. The master prepreg material 112 has a width W in the transverse direction T (normal to a longitudinal direction L). The width in this embodiment is 1m, but the skilled addressee would understand that other widths are possible. The length Lp of master prepreg material 112 stored on the master roll is 1000m in this embodiment, but is typically in the range of 700 to 1,500 metres. The prepreg material moves in the longitudinal direction L during the process.

The cutting assembly 104 comprises a plurality of N cutting blades 114 spaced apart in the transverse direction T. Each cutting blade is configured to cut through the thickness of the prepreg material as it moves in the longitudinal direction. The cutting blades 114 are equally spaced such that N+1 strips or tapes 116 of prepreg material having width w are produced where w=W/(N+1).

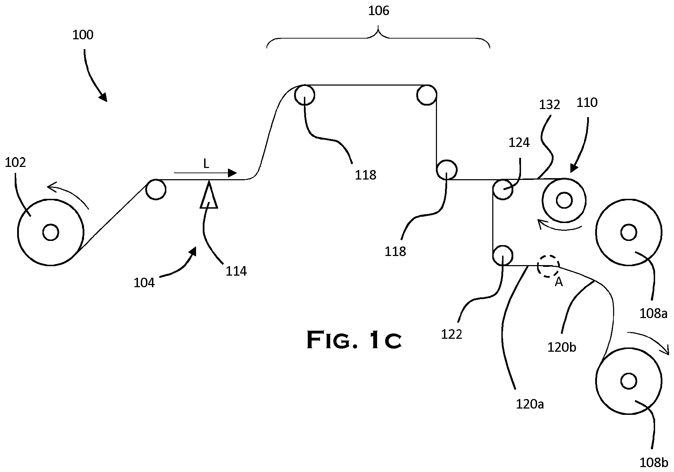

Although not shown in Figure 1 for simplicity, once all of the material 112 on the master roll 102 has been slit, a new master roll essentially identical to the first master roll 102 is arranged for slitting using the cutting assembly 104 to produce a further plurality of tapes essentially identical to the first plurality of tapes 116, and each of the further plurality of tapes are joined to one of the first plurality of tapes 116, so that the length of each of the individual tapes 116 is greater than the length of the prepreg 112 on the master roll 102. The slit tapes may be joined in any convenient manner and the process is preferably continuous, such that the first ends of a new slit tape is joined to the second ends of an original slit tape 116 as soon as it is formed, i.e. before the rest of the further tape is formed by slitting from the master. As many master rolls of prepreg 102 may be joined in this manner as necessary to produce the desired length of rolled intermediate material 132. For example, nine master rolls 102 each of 1,000m in length may be joined to produce an intermediate material 132 of approximately 9,000m.

Figures 1B and 1C then show what happens to one of the N+1 tapes 116, although it will be appreciated that in a typical process, all N+1 tapes are simultaneously treated in this manner.

The tape 116 is passed through the tensioning assembly 106, which comprises a series of rollers 118.

A first length of interleaving material 120a is provided, wound onto a first interleaving material roll 108a. The interleaving material is typically 3 to 12mm wider than the tapes of prepreg 116, but crucially is typically supplied in a shorter length than the desired length of intermediate material 132.

Interleaving material 120a is off-wound from the roll 108a and passes over a roller 122 to an assembly roller 124. At this point, the first end of the interleaving material 120a comes into contact with the prepreg tape 116, and as the prepreg tape 116 and the first section of interleaving material 120a pass over assembly roller 124 they gradually come into planar contact beginning from the first end of the first section of the interleaving material 120a.

The interleaving material 120 is typically a thermoplastic polymer material, in this case LDPE (low density polyethylene). Such materials are generally provided in lengths in the order of hundreds of metres up to about 2,500m. Typically, therefore the available lengths of the interleaving material Li will be less than the total length of the strips of prepreg material Lp used in the process, i.e. the length of the tapes of prepreg produced by the joining of lengths of prepreg slit from multiple master rolls or by the slitting of very long lengths of master prepreg. More typically Li < 2xLp. It is not unusual for Li to be an order less than Lp, for example Li may be in the order of hundreds of meters up to 2,500m, with Lp in the order of thousands of metres, such as 9,000m or more.

In order to provide a length of interleaving material 120 suitable to layer a substantial length (if not all) of the length of a prepreg tape 116, according to the invention a plurality of lengths of interleaving material 120a, 120b, etc. are joined as part of the process, as described below.

Before the roll 108a is exhausted (i.e. the interleaving material 120a has been used), a second roll 108b of interleaving material 120b is provided. The second length of interleaving material 120b is joined to the first length 120a at a join 126. A typical join 126 is shown at region A in Figure 1C. In the present embodiment, the apparatus 100 is stopped to facilitate the join. Further details of how the first length of interleaving material 120a is joined to the second length of interleaving material 120b are given below.

The wider interleaving material 120 overhangs the prepreg tape 116 on both sides. Because the prepreg is tacky, the assembled prepreg tape 116 and interleaving material 120 form an intermediate material 132. The intermediate material 132 is wound onto the spool winder 110 such that the interleaving material 120 is radially inward of the prepreg tape 116 as it is wound. This prevents the tacky prepreg sticking to itself.

The resulting reel 110 of intermediate material 132 comprising the layered interleaving material and prepreg can then be passed to an automated fibre placement rig for deposition. It will be understood that after unwinding, the AFP rig will separate the interleaving material before depositing the prepreg.

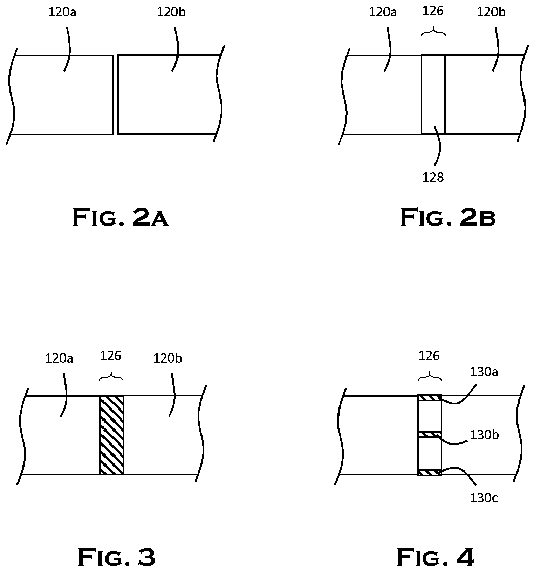

Figures 2A and 2B show a first way in which the join 126 can be formed. The two sections 120a, 120b are overlapped to form an overlap 128, and heat and pressure is applied to form the join 126 (Figure 2B) as a lap joint. The overlap is typically in the range of 20mm to 50mm in the longitudinal direction.

Figure 3 shows a first way in which heat and pressure may be applied to the overlap 128. In this example, equal heat and pressure is applied over the entire overlap 128 to fuse the sections 120a, 120b. The heat and pressure may be applied by a hand-held device, preferably a battery powered hand-held device, having a heating head with a width equal to the width of the join 128 in the longitudinal direction and a length equal to the width of the two sections of interleaving material 120a, 120b.

Figure 4 shows a second way in which heat and pressure may be applied to the overlap 128. In this example, equal heat and pressure is applied to three individual longitudinally extending regions 130a, 130b, 130c of the overlap 128 to fuse the sections 120a, 120b. In this embodiment, the heat and pressure may be applied by a small heating element, such as a heated wire, extending in the longitudinal direction, as will be discussed below.

In each of the embodiments of Figures 3 and 4, it will be noted that the lateral edges of the overlap 128 (and therefore the sections 120a, 120b) are sealed. This is advantageous as it ensures that there is less potential for snagging and other such problems which may be caused by loose ends / edges.

In the embodiments shown in Figures 1A, 1B, 1C, 2A, 2B, 3 and 4 the heating to form a join is preferably carried out using a hand-held device, and most preferably a battery powered hand-held device.

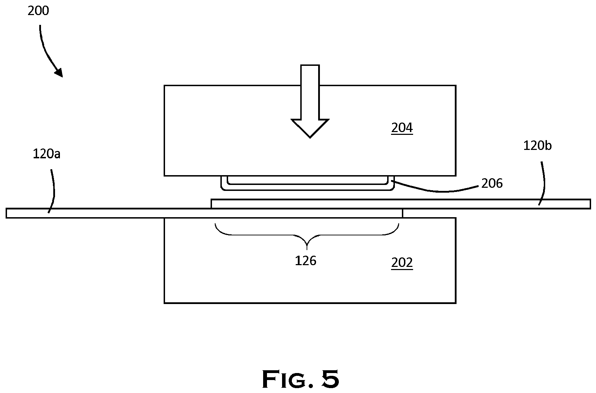

Referring to Figure 5, an apparatus 200 for joining the two sections 120a, 120b is shown. The apparatus comprises an anvil 202 and a press 204. The press comprises a single heated wire 206. The press 204 can be advanced towards the anvil 202 to apply simultaneous heat and pressure from the wire 206 onto the overlap 128. This creates a first join region 130a. The apparatus 200 is then moved in the transverse direction to form the second join regions 130b, and then moved again to form the third join region 130c (although it will be understood that the three join regions could be formed in any order, or that more join regions could be formed if required). In one embodiment both sides of the device 200 (the press 204 and the anvil 202) may comprise heating elements to thereby heat both sides of the interleaving material. Instead of a wire, the joining apparatus 200 may have heated "heads" of different shapes and configurations, for example hatching, cross-hatching, or a plurality or matrix of "dots" etc. This device is preferably a hand-held device, and most preferably a battery powered hand-held device.

Application of heat to the thermoplastic interleaving material partially melts and tackifies it, so that it joins to the opposing section.

When using the apparatus 200 in the process of the present invention, the pressure is preferably slowly released after sealing (which in these embodiments takes about 2 seconds). The speed of release depends on a number of factors, but the time and speed at which pressure is released is determined by when the joint is stable. This may be achieved by allowing the joint to cool sufficiently to form, either by stopping heating while the press is still closed or releasing the press slowly so the joint cools before the press and anvil are fully separated.

Once cool, the interleaving material will not exhibit further tackiness.

In an example of joining lengths of interleaving material according to the present invention, the respective ends of two strips of 9mm wide and 50µm thick LDPE (PE Hoods Blue, available from Plasthill B.V.) were overlaid to give an overlap of 25mm and joined together by the application of heat and pressure using a battery operated hand-held device (Bheema Mini Portable Handy Plastic Bag Sealer Sealing Machine, available from Amazon, UK). This device is small (approximately 110mm by 45mm by 25mm) and lightweight (approximately 58g), and does not require connection to a separate power source, and is therefore particularly convenient for use in the restricted spaces available on a process line for the manufacture of narrow prepreg tapes with an interleaving material layer. The full melting point of the LDPE is approximately 124°C, but it softens and becomes pliable as it is heated up through 40°C to 110°C. Thus, the optimum temperature for forming a joint between the strips of LDPE is in the range 70°C to 110°C, although to fully form the joint it is also necessary to apply pressure. Using pressures in the range that can be conveniently achieved by hand squeezing the device (i.e. from 30N to 400N) joints can be formed in from 2 seconds (using temperatures towards the top of the range) to 8 seconds (using temperatures towards the bottom of the range).

When using the sealer device, the act of releasing pressure breaks the circuit and the resistive heating of the wire in the device therefore ceases, causing a reduction in its temperature, such that the LDPE polymer sheet cools relatively rapidly, causing the joint to consolidate and allowing the material to be handled easily. The resulting join has a tensile strength within the range of non-joined LDPE as reported by the supplier, in this case greater than 21 MPa in the machine direction.

## Claims

1. An intermediate material (132) for the manufacture of composite components, the intermediate material comprising:
a flat and elongate prepreg layer (116); and,
an interleaving layer (120) in contact with at least one side of the prepreg layer (116), the interleaving layer (120) comprising at least two sections of thermoplastic interleaving material (120a, 120b), each of the sections of thermoplastic interleaving material (120a, 120b) being joined by heat to at least one other section of thermoplastic interleaving material to form a continuous length of interleaving material (120), whereby the at least two sections of thermoplastic interleaving material (120a, 120b) are joined by partial melting, which partial melting is caused by the application of heat; and
in which the intermediate material (132) is wound such that the interleaving layer (120) reduces or eliminates self-contact of the prepreg layer (116).

2. An intermediate material (132) according to claim 1, in which at least two of the sections of thermoplastic interleaving material (120a, 120b) are joined by a lap joint (126); preferably in which the length of overlap (128) of the two sections of thermoplastic interleaving material (120a, 120b) forming the lap join (126) is from 5mm to 100mm, more preferably from 10mm to 80mm, even more preferably from 20mm to 50mm.

3. An intermediate material (132) according to claim 1 or claim 2, in which at least two of the sections of thermoplastic interleaving material (120a, 120b) are joined at a continuous join region (126) across the width of the two sections of thermoplastic interleaving material (120a, 120b); preferably wherein the interleaving layer (120) has a longitudinal axis, and in which the join region (128) extends parallel to a transverse axis perpendicular to the longitudinal axis.

4. An intermediate material (132) according to claim 1 or claim 2, in which at least two of the sections of thermoplastic interleaving material (120a, 120b) are joined at a plurality of discrete join regions (130a, 130b, 130c) across the width of the two sections of thermoplastic interleaving material (120a, 120b); preferably in which each of the plurality of join regions (130a, 13b, 130c) are elongate and parallel to the longitudinal direction of the thermoplastic interleaving material (120).

5. An intermediate material (132) according to any preceding claim, in which the width of the prepreg layer (116) is from 2mm to 100mm, preferably from 3mm to 55mm.

6. An intermediate material (132) according to any preceding claim having a length of at least 3,000m, preferably from 3,000m to 25,000, more preferably from 5,000m to 15,000m.

7. A method of manufacturing an intermediate material (132) comprising the steps of:
a) providing a length of master prepreg (112) having a first width (W);
b) cutting the master prepreg (112) into a plurality of longitudinal strips of prepreg (116), each of the strips (116) having a width (w) less than the width (W) of the master prepreg (116);
c) providing a first section of thermoplastic interleaving material (120a), the first section of thermoplastic interleaving material (120a) having a length less than the length of each of the strips of prepreg (116);
d) placing a first end of the first section of thermoplastic interleaving material (120a) in contact with a first end of one of the strips of prepreg (116), the first section of thermoplastic interleaving layer (120a) having a width the same as or greater than the width (w) of the strip of prepreg (116);
e) bringing the length of the first section of thermoplastic interleaving material (120a) gradually into contact with the length of the strip of prepreg (116);
f) before the second end of the first section of thermoplastic interleaving material (120a) contacts the strip of prepreg (116) providing a second section of thermoplastic interleaving material (120b) having a width the same as or greater than the width (w) of the strip of prepreg (116), and joining the second end of the first section of thermoplastic interleaving material (120a) to a first end of the second section of thermoplastic interleaving material (120b) by the application of heat to form a continuous length of thermoplastic interleaving material (120), whereby the application of heat causes partial melting of at least one, and preferably both, of the joined ends of the two sections of thermoplastic interleaving material (120a, 120b);
g) once the second end of the first section of thermoplastic interleaving material (120a) contacts the strip of prepreg (116) bringing the length of the second section of thermoplastic interleaving material (120b) gradually into contact with the length of the strip of prepreg (116);
h) if necessary, repeating steps f) and g) until the full length of the strip of prepreg (116) is in contact with a continuous length of thermoplastic interleaving material (120); and
i) winding the strip of prepreg (116) in contact with the continuous layer of thermoplastic interleaving material (120) such that the interleaving material (120) reduces or eliminates self-contact of the prepreg layer (116).

8. A method according to claim 7, in which the step of applying heat in step f) also comprises applying pressure.

9. A method according to claim 7 or claim 8, in which the step of joining the two sections of thermoplastic interleaving material (120a, 120b) in step f) comprises the step of overlapping the ends of the two sections (120a, 120b) such that they are joined by a lap joint (126); preferably wherein the length of overlap (128) is from 5mm to 100mm, preferably from 10mm to 80mm, more preferably from 20mm to 50mm.

10. A method according to any of claims 7 to 9, in which in step f) the ends of the two sections of thermoplastic interleaving material (120a, 120b) are joined at a continuous join region (126) across the width of the two sections of thermoplastic interleaving material (120a, 120b); preferably in which the interleaving layer (120) has a longitudinal axis, in which the join region extends parallel to a transverse axis perpendicular to the longitudinal axis.

11. A method according to any of claims 7 to 9, in which in step f) the ends of the two sections of thermoplastic interleaving material (120a, 120b) are joined at a plurality of discrete join regions (130a, 130b, 130c) across the width of the two sections of thermoplastic interleaving material (120a, 120b); preferably in which each of the plurality of join regions (130a, 130b, 130c) are elongate and parallel to the longitudinal direction of the thermoplastic interleaving material (120).

12. A method according to claim 11, in which the join regions (130a, 130b, 130c) are formed by contact with a heated wire.

13. A method according to any of claims 7 to 12, in which the length of each of the strips of prepreg (116) is at least 3,000m, preferably from 3,000 to 25,000m, more preferably 5,000 to 15,000m.

14. A method according to any of claims 7 to 13, wherein the length of each of the strips of prepreg (116) is greater than the length of the master prepreg (112) and the process includes the further step of cutting at least one further length of master prepreg (112) into a further plurality of longitudinal strips of prepreg (116) and joining each of the further plurality of longitudinal strips of prepreg (116) to the first plurality of longitudinal strips of prepreg (116); preferably wherein each of the lengths of master prepreg (116) is from 50m to 2,000m long, preferably from 700m to 1500m long.

15. A method according to any of claims 7 to 14, in which the step of applying heat in step f) comprises applying heat using a hand-held heating device; preferably in which the hand-held heating device is a battery powered device.

## Patentansprüche

1. Ein Zwischenmaterial (132) für die Herstellung von Verbundwerkstoffkomponenten, wobei das Zwischenmaterial Folgendes beinhaltet:
eine flache und langgestreckte Prepreg-Schicht (116); und
eine Trennschicht (120) in Kontakt mit mindestens einer Seite der Prepreg-Schicht (116), wobei die Trennschicht (120) mindestens zwei Abschnitte aus thermoplastischem Trennmaterial (120a, 120b) beinhaltet, wobei jeder der Abschnitte aus thermoplastischem Trennmaterial (120a, 120b) durch Hitze mit mindestens einem anderen Abschnitt aus thermoplastischem Trennmaterial zusammengefügt wird, um eine kontinuierliche Länge aus Trennmaterial (120) zu bilden, wodurch die mindestens zwei Abschnitte aus thermoplastischem Trennmaterial (120a, 120b) durch teilweises Schmelzen zusammengefügt werden, wobei das teilweise Schmelzen durch die Anwendung von Hitze verursacht wird; und
wobei das Zwischenmaterial (132) so gewickelt ist, dass die Trennschicht (120) den Selbstkontakt der Prepreg-Schicht (116) reduziert oder eliminiert.

2. Zwischen material (132) gemäß Anspruch 1, wobei mindestens zwei der Abschnitte aus thermoplastischem Trennmaterial (120a, 120b) durch einen Überlappungsstoß (126) zusammengefügt sind; wobei die Länge der Überlappung (128) der beiden Abschnitte aus thermoplastischem Trennmaterial (120a, 120b), die den Überlappungsstoß (126) bilden, vorzugsweise von 5 mm bis 100 mm, bevorzugter von 10 mm bis 80 mm, noch bevorzugter von 20 mm bis 50 mm beträgt.

3. Zwischen material (132) gemäß Anspruch 1 oder Anspruch 2, wobei mindestens zwei der Abschnitte aus thermoplastischem Trennmaterial (120a, 120b) an einem kontinuierlichen Stoßbereich (126) über die Breite der beiden Abschnitte aus thermoplastischem Trennmaterial (120a, 120b) zusammengefügt sind; wobei die Trennschicht (120) vorzugsweise eine Längsachse aufweist und wobei sich der Stoßbereich (128) parallel zu einer Querachse senkrecht zu der Längsachse erstreckt.

4. Zwischenmaterial (132) gemäß Anspruch 1 oder Anspruch 2, wobei mindestens zwei der Abschnitte aus thermoplastischem Trennmaterial (120a, 120b) an einer Vielzahl von diskreten Stoßbereichen (130a, 130b, 130c) über die Breite der beiden Abschnitte aus thermoplastischem Trennmaterial (120a, 120b) zusammengefügt sind; wobei jeder der Vielzahl von Stoßbereichen (130a, 130b, 130c) vorzugsweise länglich und parallel zu der Längsrichtung des thermoplastischen Trennmaterials (120) liegt.

5. Zwischen material (132) gemäß einem der vorhergehenden Ansprüche, wobei die Breite der Prepreg-Schicht (116) 2 mm bis 100 mm, vorzugsweise 3 mm bis 55 mm, beträgt.

6. Zwischen material (132) gemäß einem der vorhergehenden Ansprüche, das eine Länge von mindestens 3 000 m, vorzugsweise von 3 000 m bis 25 000, besonders bevorzugt von 5 000 m bis 15 000 m aufweist.

7. Ein Verfahren zur Herstellung eines Zwischenmaterials (132), das die folgenden Schritte beinhaltet:
a) Bereitstellen einer Länge von Master-Prepreg (112), das eine erste Breite (W) aufweist;
b) Schneiden des Master-Prepregs (112) in eine Vielzahl von Längsstreifen aus Prepreg (116), wobei jeder der Streifen (116) eine Breite (w) aufweist, die geringer ist als die Breite (W) des Master-Prepregs (116);
c) Bereitstellen eines ersten Abschnitts aus thermoplastischem Trennmaterial (120a), wobei der erste Abschnitt aus thermoplastischem Trennmaterial (120a) eine Länge aufweist, die geringer ist als die Länge jedes der Streifen aus Prepreg (116);
d) In-Kontakt-Bringen eines ersten Endes des ersten Abschnitts aus thermoplastischem Trennmaterial (120a) mit einem ersten Ende eines der Streifen aus Prepreg (116), wobei der erste Abschnitt aus thermoplastischer Trennschicht (120a) eine Breite aufweist, die gleich oder größer als die Breite (w) des Streifens aus Prepreg (116) ist;
e) allmähliches In-Kontakt-Bringen der Länge des ersten Abschnitts aus thermoplastischem Trennmaterial (120a) mit der Länge des Streifens aus Prepreg (116);
f) vor dem zweiten Ende des ersten Abschnitts aus thermoplastischem Trennmaterial (120a), das mit dem Streifen aus Prepreg (116) in Kontakt steht, Bereitstellen eines zweiten Abschnitts aus thermoplastischem Trennmaterial (120b), das eine Breite aufweist, die gleich oder größer als die Breite (w) des Streifens aus Prepreg (116) ist, und Zusammenfügen des zweiten Endes des ersten Abschnitts aus thermoplastischem Trennmaterial (120a) mit einem ersten Ende des zweiten Abschnitts aus thermoplastischem Trennmaterial (120b) durch die Anwendung von Hitze, um eine kontinuierliche Länge des thermoplastischen Trennmaterials (120) zu bilden, wodurch die Anwendung von Hitze ein teilweises Schmelzen von mindestens einem, und vorzugsweise von beiden, der zusammengefügten Enden der zwei Abschnitte aus thermoplastischem Trennmaterial (120a, 120b) verursacht;
g) sobald das zweite Ende des ersten Abschnitts aus thermoplastischem Trennmaterial (120a) mit dem Streifen aus Prepreg (116) in Kontakt kommt, allmähliches In-Kontakt-Bringen der Länge des zweiten Abschnitts aus thermoplastischem Trennmaterial (120b) mit der Länge des Streifens aus Prepreg (116);
h) falls erforderlich, Wiederholen der Schritte f) und g), bis die gesamte Länge des Streifens aus Prepreg (116) mit einer kontinuierlichen Länge des thermoplastischen Trennmaterials (120) in Kontakt ist; und
i) Wickeln des Streifens aus Prepreg (116) in Kontakt mit der kontinuierlichen Schicht aus thermoplastischem Trennmaterial (120), sodass das Trennmaterial (120) den Selbstkontakt der Prepreg-Schicht (116) reduziert oder eliminiert.

8. Verfahren gemäß Anspruch 7, wobei der Schritt des Anwendens von Hitze in Schritt f) auch das Anwenden von Druck beinhaltet.

9. Verfahren gemäß Anspruch 7 oder Anspruch 8, wobei der Schritt des Zusammenfügens der beiden Abschnitte aus thermoplastischem Trennmaterial (120a, 120b) in Schritt f) den Schritt des Überlappens der Enden der beiden Abschnitte (120a, 120b) beinhaltet, sodass sie durch einen Überlappungsstoß (126) zusammengefügt werden; wobei die Länge der Überlappung (128) von 5 mm bis 100 mm, vorzugsweise von 10 mm bis 80 mm, besonders bevorzugt von 20 mm bis 50 mm beträgt.

10. Verfahren gemäß einem der Ansprüche 7 bis 9, wobei in Schritt f) die Enden der beiden Abschnitte aus thermoplastischem Trennmaterial (120a, 120b) an einem kontinuierlichen Stoßbereich (126) über die Breite der beiden Abschnitte aus thermoplastischem Trennmaterial (120a, 120b) zusammengefügt werden; wobei die Trennschicht (120) vorzugsweise eine Längsachse aufweist, wobei sich der Stoßbereich parallel zu einer Querachse senkrecht zu der Längsachse erstreckt.

11. Verfahren gemäß einem der Ansprüche 7 bis 9, wobei in Schritt f) die Enden der beiden Abschnitte aus thermoplastischem Trennmaterial (120a, 120b) an einer Vielzahl von diskreten Stoßbereichen (130a, 130b, 130c) über die Breite der beiden Abschnitte des thermoplastischen Trennmaterials (120a, 120b) zusammengefügt werden; wobei jeder der Vielzahl von Stoßbereichen (130a, 130b, 130c) vorzugsweise länglich und parallel zu der Längsrichtung des thermoplastischen Trennmaterials (120) liegt.

12. Verfahren gemäß Anspruch 11, wobei die Stoßbereiche (130a, 130b, 130c) durch Kontakt mit einem erhitzten Draht gebildet werden.

13. Verfahren gemäß einem der Ansprüche 7 bis 12, wobei die Länge jedes der Streifen aus Prepreg (116) mindestens 3 000 m, vorzugsweise 3 000 bis 25 000 m, besonders bevorzugt 5 000 bis 15 000 m beträgt.

14. Verfahren gemäß einem der Ansprüche 7 bis 13, wobei die Länge jedes der Streifen aus Prepreg (116) größer ist als die Länge des Master-Prepregs (112) und der Prozess den weiteren Schritt des Schneidens mindestens einer weiteren Länge aus Master-Prepreg (112) in eine weitere Vielzahl von Längsstreifen aus Prepreg (116) und des Zusammenfügens jedes der weiteren Vielzahl von Längsstreifen aus Prepreg (116) mit der ersten Vielzahl von Längsstreifen aus Prepreg (116) umfasst; wobei jede der Längen aus Master-Prepreg (116) vorzugsweise zwischen 50 m und 2 000 m lang, vorzugsweise zwischen 700 m und 1 500 m lang ist.

15. Verfahren gemäß einem der Ansprüche 7 bis 14, wobei der Schritt des Anwendens von Hitze in Schritt f) das Anwenden von Hitze unter Verwendung einer handgehaltenen Heizvorrichtung beinhaltet; wobei die handgehaltene Heizvorrichtung vorzugsweise eine batteriebetriebene Vorrichtung ist.

## Revendications

1. Un matériau intermédiaire (132) destiné à la fabrication de composants composites, le matériau intermédiaire comprenant :
une couche de préimprégné (116) plate et allongée ; et,
une couche intercalaire (120) en contact avec au moins un côté de la couche de préimprégné (116), la couche intercalaire (120) comprenant au moins deux sections de matériau intercalaire thermoplastique (120a, 120b), chaque section parmi les sections de matériau intercalaire thermoplastique (120a, 120b) étant jointe par de la chaleur à au moins une autre section de matériau intercalaire thermoplastique pour former une longueur continue de matériau intercalaire (120), grâce à quoi les au moins deux sections de matériau intercalaire thermoplastique (120a, 120b) sont jointes par fusion partielle, laquelle fusion partielle est provoquée par l'application de chaleur ; et
le matériau intermédiaire (132) étant enroulé de telle sorte que la couche intercalaire (120) réduise ou élimine un auto-contact de la couche de préimprégné (116).

2. Un matériau intermédiaire (132) selon la revendication 1, dans lequel au moins deux des sections de matériau intercalaire thermoplastique (120a, 120b) sont jointes par un joint à recouvrement (126) ; préférablement dans lequel la longueur de chevauchement (128) des deux sections de matériau intercalaire thermoplastique (120a, 120b) formant le joint à recouvrement (126) fait de 5 mm à 100 mm, plus préférablement de 10 mm à 80 mm, plus préférablement encore de 20 mm à 50 mm.

3. Un matériau intermédiaire (132) selon la revendication 1 ou la revendication 2, dans lequel au moins deux des sections de matériau intercalaire thermoplastique (120a, 120b) sont jointes au niveau d'une région de joint continue (126) sur toute la largeur des deux sections de matériau intercalaire thermoplastique (120a, 120b) ; préférablement où la couche intercalaire (120) a un axe longitudinal, et dans lequel la région de joint (128) s'étend parallèlement à un axe transversal perpendiculaire à l'axe longitudinal.

4. Un matériau intermédiaire (132) selon la revendication 1 ou la revendication 2, dans lequel au moins deux des sections de matériau intercalaire thermoplastique (120a, 120b) sont jointes au niveau d'une pluralité de régions de joint discrètes (130a, 130b, 130c) sur toute la largeur des deux sections de matériau intercalaire thermoplastique (120a, 120b) ; préférablement dans lequel chaque région parmi la pluralité de régions de joint (130a, 13b, 130c) est allongée et parallèle au sens longitudinal du matériau intercalaire thermoplastique (120).

5. Un matériau intermédiaire (132) selon n'importe quelle revendication précédente, dans lequel la largeur de la couche de préimprégné (116) fait de 2 mm à 100 mm, préférablement de 3 mm à 55 mm.

6. Un matériau intermédiaire (132) selon n'importe quelle revendication précédente ayant une longueur d'au moins 3 000 m, préférablement de 3 000 m à 25 000, plus préférablement de 5 000 m à 15 000 m.

7. Une méthode consistant à fabriquer un matériau intermédiaire (132) comprenant les étapes consistant :
a) à fournir une longueur de préimprégné original (112) ayant une première largeur (W) ;
b) à découper le préimprégné original (112) en une pluralité de bandes longitudinales de préimprégné (116), chaque bande parmi les bandes (116) ayant une largeur (w) inférieure à la largeur (W) du préimprégné original (116) ;
c) à fournir une première section de matériau intercalaire thermoplastique (120a), la première section de matériau intercalaire thermoplastique (120a) ayant une longueur inférieure à la longueur de chaque bande de préimprégné parmi les bandes de préimprégné (116) ;
d) à mettre une première extrémité de la première section de matériau intercalaire thermoplastique (120a) en contact avec une première extrémité de l'une des bandes de préimprégné (116), la première section de couche intercalaire thermoplastique (120a) ayant une largeur identique ou supérieure à la largeur (w) de la bande de préimprégné (116) ;
e) à amener la longueur de la première section de matériau intercalaire thermoplastique (120a) graduellement en contact avec la longueur de la bande de préimprégné (116) ;
f) avant que la deuxième extrémité de la première section de matériau intercalaire thermoplastique (120a) n'entre en contact avec la bande de préimprégné (116), à fournir une deuxième section de matériau intercalaire thermoplastique (120b) ayant une largeur identique ou supérieure à la largeur (w) de la bande de préimprégné (116), et à joindre la deuxième extrémité de la première section de matériau intercalaire thermoplastique (120a) à une première extrémité de la deuxième section de matériau intercalaire thermoplastique (120b) par l'application de chaleur pour former une longueur continue de matériau intercalaire thermoplastique (120), grâce à quoi l'application de chaleur provoque une fusion partielle d'au moins une, et préférablement des deux, des extrémités jointes des deux sections de matériau intercalaire thermoplastique (120a, 120b) ;
g) une fois que la deuxième extrémité de la première section de matériau intercalaire thermoplastique (120a) entre en contact avec la bande de préimprégné (116), à amener la longueur de la deuxième section de matériau intercalaire thermoplastique (120b) graduellement en contact avec la longueur de la bande de préimprégné (116) ;
h) si nécessaire, à répéter les étapes f) et g) jusqu'à ce que la longueur totale de la bande de préimprégné (116) soit en contact avec une longueur continue de matériau intercalaire thermoplastique (120) ; et
i) à enrouler la bande de préimprégné (116) en contact avec la couche continue de matériau intercalaire thermoplastique (120) de telle sorte que le matériau intercalaire (120) réduise ou élimine un auto-contact de la couche de préimprégné (116).

8. Une méthode selon la revendication 7, dans laquelle l'étape consistant à appliquer de la chaleur à l'étape f) comprend aussi le fait d'appliquer de la pression.

9. Une méthode selon la revendication 7 ou la revendication 8, dans laquelle l'étape consistant à joindre les deux sections de matériau intercalaire thermoplastique (120a, 120b) à l'étape f) comprend l'étape consistant à faire se chevaucher les extrémités des deux sections (120a, 120b) de telle sorte qu'elles soient jointes par un joint à recouvrement (126) ; préférablement où la longueur de chevauchement (128) fait de 5 mm à 100 mm, préférablement de 10 mm à 80 mm, plus préférablement de 20 mm à 50 mm.

10. Une méthode selon n'importe lesquelles des revendications 7 à 9, dans laquelle à l'étape f) les extrémités des deux sections de matériau intercalaire thermoplastique (120a, 120b) sont jointes au niveau d'une région de joint continue (126) sur toute la largeur des deux sections de matériau intercalaire thermoplastique (120a, 120b) ; préférablement dans laquelle la couche intercalaire (120) a un axe longitudinal, dans laquelle la région de joint s'étend parallèlement à un axe transversal perpendiculaire à l'axe longitudinal.

11. Une méthode selon n'importe lesquelles des revendications 7 à 9, dans laquelle à l'étape f) les extrémités des deux sections de matériau intercalaire thermoplastique (120a, 120b) sont jointes au niveau d'une pluralité de régions de joint discrètes (130a, 130b, 130c) sur toute la largeur des deux sections de matériau intercalaire thermoplastique (120a, 120b) ; préférablement dans laquelle chaque région de joint parmi la pluralité de régions de joint (130a, 130b, 130c) est allongée et parallèle au sens longitudinal du matériau intercalaire thermoplastique (120).

12. Une méthode selon la revendication 11, dans laquelle les régions de joint (130a, 130b, 130c) sont formées par contact avec un fil chauffé.

13. Une méthode selon n'importe lesquelles des revendications 7 à 12, dans laquelle la longueur de chaque bande de préimprégné parmi les bandes de préimprégné (116) fait au moins 3 000 m, préférablement de 3 000 à 25 000 m, plus préférablement 5 000 à 15 000 m.

14. Une méthode selon n'importe lesquelles des revendications 7 à 13, où la longueur de chaque bande de préimprégné parmi les bandes de préimprégné (116) est supérieure à la longueur du préimprégné original (112) et le procédé inclut l'étape supplémentaire consistant à découper au moins une longueur supplémentaire de préimprégné original (112) en une pluralité supplémentaire de bandes longitudinales de préimprégné (116) et à joindre chaque bande longitudinale parmi la pluralité supplémentaire de bandes longitudinales de préimprégné (116) aux bandes longitudinales de la première pluralité de bandes longitudinales de préimprégné (116) ; préférablement où chaque longueur parmi les longueurs de préimprégné original (116) fait de 50 m à 2 000 m de long, préférablement de 700 m à 1 500 m de long.

15. Une méthode selon n'importe lesquelles des revendications 7 à 14, dans laquelle l'étape consistant à appliquer de la chaleur à l'étape f) comprend le fait d'appliquer de la chaleur à l'aide d'un dispositif de chauffage portatif ; préférablement dans laquelle le dispositif de chauffage portatif est un dispositif alimenté par batterie.
